(19) **Europäisches Patentamt**

**European Patent Office**

**Office européen des brevets**

(11) Veröffentlichungsnummer: **0 322 521 B1**

## (12) EUROPÄISCHE PATENTSCHRIFT

(45) Veröffentlichungstag der Patentschrift:
04.09.91 Patentblatt 91/36

(21) Anmeldenummer: 88116732.4

(22) Anmeldetag: 08.10.88

(51) Int. Cl.⁵: **C08L 15/00,** C08L 9/02,
C08L 33/06, C08L 43/04,
// (C08L15/00, 33:06),
(C08L33/06, 15:00),
(C08L15/00, 43:04),
(C08L43/04, 15:00)

(54) **Co-vulkanisierbare Kautschuk-Mischung.**

(30) Priorität: 24.12.87 DE 3743999

(43) Veröffentlichungstag der Anmeldung:
05.07.89 Patentblatt 89/27

(45) Bekanntmachung des Hinweises auf die
Patenterteilung:
04.09.91 Patentblatt 91/36

(84) Benannte Vertragsstaaten:
AT BE CH DE ES FR GB GR IT LI LU NL SE

(56) Entgegenhaltungen:
EP-A- 0 163 971
US-A- 4 439 494

(73) Patentinhaber: Haas, Otto
Giessenerstrasse 5
W-8500 Nürnberg (DE)

(72) Erfinder: Struckmeyer, Horst Friedrich, Dr.
Bierlachweg 70
W-8520 Erlangen (DE)

(74) Vertreter: Tergau, Enno et al
Patentanwälte Tergau & Pohl Postfach 11 9;
47 Hefnersplatz 3
W-8500 Nürnberg 11 (DE)

EP 0 322 521 B1

## Beschreibung

Die Erfindung betrifft eine co-vulkanisierbare Kautschuk-Mischung aus nitrilgruppenhaltigen CH-Polymeren, weiteren Polymeren und Zusatzstoffen.

In der Elastomer-Technologie ist bekannt, daß co-vulkanisierbare Kautschuk-Mischungen, die unter Verwendung von nitrilgruppenhaltigen CH-Polymeren mit ausgesuchten weiteren Polymeren hergestellt sind, extrem gute Eigenschaften aufweisen können. So ist beispielsweise aus der deutschen Offenlegungsschrift 3337397 eine Kautschuk-Mischung bekannt, die aus 5-95 Gew.% nitrilgruppenhaltigen Polymeren und 95-5 Gew.% Fluorpolymeren besteht. Die nitrilgruppenhaltigen Polymeren sollen dabei 25-140 Nitrilstickstoffatome und weniger als 35 Doppelbindungen auf 1000 Kohlenstoffatome aufweisen. Co-Vulkanisate, die aus dieser Mischung hergestellt werden, sind hochwertige Produkte, die wärmestandfest, beständig gegen Chemikalien, Dampf und heißes Wasser sind. Sie weisen insbesondere auch ein äußerst geringes Quellverhalten in Motorentreibstoffen und Motorenölen einschließlich der in diesen Stoffen verwendeten Additiven auf. Diese Eigenschaften machen sie insbesondere geeignet für die Herstellung von Schlauchleitungen, Dichtungsringen, Manschetten, Kabelisolierungen, Faltenbälge u.dgl., die in Verbrennungskraftmaschinen eingesetzt werden sollen. Wesentlich ist dabei, daß die guten Eigenschaften auch bei erhöhter Temperatur bis über 150°C erhalten bleiben.

Nachteilig bei den vorbekannten Co-Vulkanisaten ist der Fluorgehalt. Zum einen ist die Herstellung von Fluorelastomeren teuer und technisch aufwendig ; zum anderen wird beim Verbrennen der Elastomere zwangsläufig Fluorwasserstoff gebildet, was aus bekannten Gründen unerwünscht ist. Der Erfindung liegt deshalb die Aufgabe zugrunde, vergleichbare oder in ihren Eigenschaften noch weiter optimierbare co-vulkanisierbare Kautschuk-Mischungen vorzuschlagen, welche halogenfrei sind.

Zur Lösung dieser Aufgabe wird eine Mischung folgender Zusammensetzung vorgeschlagen :

a)   5 bis 95 Gew.% eines nitrilgruppenhaltigen CH-Polymeren ;
b)   95 bis 5 Gew.% eines silikon-durchdrungenen Polyacrylat-Polymeren,

wobei sich die Prozentangaben auf die Summe (a + b) beziehen und die Mischung gegebenenfalls noch weitere Hilfs- und Zusatzstoffe enthält. Die verwendeten CH-Polymere (a) sollen vorzugsweise 25 bis 140 Nitrilstickstoffatome und weniger als 35, vorzugsweise weniger als 2 Doppelbindungen auf 1000 C-Atome enthalten. Die Polymere sind also weitgehend gesättigt, was bekannterweise durch selektive Hydrierung der Doppelbindungen in der Grundkette von Butadien-Acrylnitril-Copolymeren erreicht werden kann. Der Schwerpunkt der Erfindung liegt in der Verwendung der silikondurchdrungenen Acrylat-Polymeren, die an die Stelle der vorbekannten Fluor-Polymere treten. Als besonders vorteilhaft hat es sich erwiesen, solche silikondurchdrungenen Polyacrylat-Polymere zu verwenden, welche durch Co-Polymerisation von Acrylatmonomeren mit Silikonen oder Organosilylverbindungen erhalten wurden, die unterschiedlich reaktive Gruppen im Molekül enthalten. Die Gruppen sollen dabei vorzugsweise so ausgesucht werden, daß das silikondurchdrungene Acrylat-Polymer reaktive Vinylsiloxangruppen enthält. Diese reaktiven Vinylsiloxangruppen begünstigen die Vernetzung bei der Co-Vulkanisation und tragen auf diese Weise dazu bei, die Mischung in weiten Grenzen abstimmbar und das Vulkanisat den gewünschten Eigenschaften anpassbar zu machen. Die Co-Vulkanisation selbst wird vorzugsweise unter Verwendung von Peroxiden oder auch mittels energiereicher Strahlen ausgeführt, wie dies an sich bekannt ist. Das Verfahren hat sich bei der Co-Vulkanisation der hier vorgeschlagenen Kautschuk-Mischungen als besonders geeignet erwiesen.

Weitgehend gesättigte nitrilgruppenhaltige Polymere werden beispielsweise durch selektives Hydrieren von Nitrilkautschuken (Butadien-Acrylnitril-Co-Polymerisaten) erhalten. Sie liefern Vulkanisate, die sich durch hohe Festigkeitseigenschaften, gute physikalische Eigenschaften auch bei höheren Temperaturen, sehr guten Abriebswiderstand auch bei hohen Temperaturen, gute Tieftemperatureigenschaften sowie weitere erwünschte technologische Eigenschaften auszeichnen. Als weitere gute Eigenschaften sind der niedrige Druckverformungsrest, sehr gute Heißluftbeständigkeit, sehr gute Ozonfestigkeit, sowie gute Beständigkeit gegen viele chemisch-aggressive Öle der Kraftfahrzeugindustrie, einschließlich additivhaltiger Öle zu nennen. Hervorzuheben ist ferner die geringe Dampf- und Gasdurchlässigkeit, die gute Beständigkeit gegen Rohöle auch in Anwesenheit von Schwefelwasserstoff und Aminen, welch letztere als Korrosionsinhibitoren zugesetzt werden. Kautschuke dieser Art sind beispielsweise aus der US-PS 3700637 und den deutschen Offenlegungsschriften 2539132 sowie 2913992 bekannt.

Die erfindungsgemäß hier einzusetzenden silikondurchdrungenen Polyacrylat-Polymere werden aus einem neuartigen Silikon-Compound, der zwei unterschiedlich reaktive Gruppen im Molekül enthält durch Copolymerisation mit Acrylsäureestern der allgemeinen Formel $H_2C=CH-CO-R$ dargestellt. In der allgemeinen Formel bedeutet R eine aliphatische Gruppe mit 1 bis 10 C-Atomen.

2

Derartige Polyacrylate gehören unter dem Namen "Royaltherm" (Laborbezeichnung X-658) zu. Produktpalette der Firma Uniroyal und sind u.a. in einem Artikel von Dr. H.F. Struckmeyer in der Oktoberausgabe 1988 der Zeitschrift "Kautschuk, Gummi, Kunststoffe" beschrieben.

Das durch Co-Polymerisation erhaltene silikondurchdrungene Polyacrylat-Polymere enthält reaktive Vinylsiloxangruppen und ist deshalb schnell mit organischen Peroxiden zu vernetzen. Der Silikon-Compound kann auch Organosilylverbindungen enthalten und in das silikondurchdrungene Polyacrylat-Polymere einbringen. Dadurch können die Tieftemperatureigenschaften und die Hitzebeständigkeit verbessert werden. Es wurde überraschend gefunden, daß es möglich ist, aus weitgehend gesättigten nitrilgruppenhaltigen Polymeren und silikondurchdrungenem Polyacrylat homogene Mischungen herzustellen, die peroxidisch oder durch energiereiche Strahlen co-vulkanisierbar sind. Die entstehenden Co-Vulkanisate besitzen eine interpenetrierende Netzwerkstruktur, erscheinen deshalb im Elektronenmikroskop einphasig, und besitzen überragende kautschuktechnologische Eigenschaften. Ein derartiges Co-Vulkanisat kann mit den bekannten silikonfreien Polyacrylat-Polymeren schon deshalb nicht hergestellt werden, weil diese sich nicht peroxidisch vernetzen lassen. Außerdem würde das Eigenschaftsbild der Co-Vulkanisate deutlich verschlechtert.

Zusätzlich zu den genannten Grundbestandteilen enthalten die Mischungen noch weitere Bestandteile, die dem Fachmann an sich bekannt sind. Es handelt sich hier beispielsweise um Füllstoffe, Weichmacher, Alterungsschutzmittel, Verarbeitungshilfsmittel, Säureakzeptoren und Vulkanisationschemikalien, letztere im Falle einer peroxidischen Vernetzung.

Als Peroxide sind geeignet :

Dialkylperoxide, Ketalperoxide, Aralkylperoxide, Peroxiäther oder Peroxiester. Die Peroxidmengen betragen 1-15 Gew.%, vorzugsweise 4-8 Gew.%, bezogen auf die Summe der Kautschukbestandteile (a + b).

Um einen hohen Vernetzungsgrad und damit einen günstigen Druckverformungsrest der Co-Vulkanisate zu erhalten, wird ein Co-Aktivator zugesetzt. Hierbei handelt es sich um polyvalente Verbindungen, die in das Vernetzungssystem eingreifen und damit die technologischen Eigenschaften des Vulkanisates beeinflussen. Die Mengen an Co-Aktivator betragen 1-8 Gew.%, vorzugsweise 2-4 Gew.%, bezogen auf die Summe (a + b). Als Co-Aktivatoren kommen in Betracht : Triallylcyanurat, Triallyltrimellitat, Diallylphthalat, m-Phenylen-bis-Maleinsäureimid, Ethylenglykoldimethacrylat, Trimethylolpropantrimethacrylat, 1,3-Butylenglykoldimethacrylat, Triallylisocyanurat, N-N'-m-Phenylendimaleinimid und andere an sich bekannnte Stoffe.

Die Co-Vulkanisate zeigen überraschenderweise überadditive Festigkeitseigenschaften, geringe Quellung in flüssigen Kohlenwasserstoffen und in additivhaltigen Mineralölen sowie ein hervorragendes Eigenschaftsniveau in den übrigen kautschuktechnologischen Eigenschaften. Gegenüber den beispielsweise aus der US-PS 4614779 und der deutschen Offenlegungsschrift 3337397 bekannten Co-Vulkanisaten aus Fluor-Kautschuken und weitgehend gesättigten nitrilgruppenhaltigen Kautschuken besitzen die vorgeschlagenen Elastomere eine wesentlich höhere Reißdehnung, bessere Tieftemperatur-Eigenschaften, eine verbesserte Weiterreißfestigkeit, auch bei hohen Temperaturen, vor allem aber deutlich verbesserte Verarbeitungseigenschaften bei Härteeinstellungen zwischen 40 und 80 Shore-A, vorzugsweise zwischen 50 und 70 Shore-A. Härteeinstellungen unter 60 Shore-A sind auf Basis von Fluorpolymeren und weitgehend gesättigten nitrilgruppenhaltigen Polymeren praktisch nicht herstellbar.

Die Verarbeitbarkeit der Co-Vulkanisate wird auch noch dadurch erleichtert, daß das Fließverhalten vor der Vulkanisation deutlich verbessert ist, weil die silikondurchdrungenen Polyacrylat-Co-Polymere im unvernetzten Zustand plastifizierend wirken und die Produkte aufgrund der verbesserten Weiterreißfestigkeit leicht entformbar sind, so daß sie mit den üblichen Verarbeitungsmaschinen ohne Probleme verarbeitet werden können.

Hervorzuheben ist des weiteren, daß die vorgeschlagenen Co-Vulkanisate aufgrund ihrer hohen Quellbeständigkeit in flüssigen Kohlenwasserstoffen für Anwendungen in stark ölbelasteter Umgebung, z.B. im Automobilsektor, hervorragend geeignet sind. Ein weiterer Vorteil liegt in der ausgezeichneten Konfektionsklebrigkeit (Tackiness) der vorgeschlagenen Co-Vulkanisate und in der sehr guten Haftung an Textilfasern und Metallen, was zusammen mit der hohen Abriebfestigkeit den Einsatz im Reifen- und Förderbandsektor nahelegt.

Die Erfindung wird im nachfolgenden anhand einiger Beispiele und unter Bezugnahme auf die Zeichnung näher erläutert.

Zum Aufstellen einer systematischen Mischungsreihe wurden zunächst zwei Vormischungen I und II hergestellt. Die Vormischungen hatten folgende Zusammensetzung :

Vormischung I:

(Alle Angaben in phr = parts per 100 rubber)

| | |
|---|---|
| HNBR | 100 |
| Magnesiumoxid | 3 |
| Ruß | 20 |
| Distyryldiphenylamin | 1,1 |
| 4- bzw. 5-Methylmercaptobenzimidazol | 0,8 |
| Polyethylen-Homopolymer | 1 |
| Stearinsäure | 0,5 |
| Carnaubawachs | 0,5 |
| Triallylisocyanurat | 2 |
| 2,5-Dimethyl-2,5-bis-(tert.butylperoxi-hexan) | 1,8 |
| Dispergier- und Gleitmittel | 2 |
| | 132,7 |

In der vorstehenden Aufstellung bedeutet HNBR hydriertes Acrylnitril-Butadien-Co-Polymerisat mit einem Acrylnitrilgehalt von mehr als 40 Gew.%, vorzugsweise von 43 Gew.%, einem Hydrierungsgrad von 99% und einer Mooney-Viskosität ML (1 + 4)/100°C von 75 ± 5.

Vormischung II:

| | |
|---|---|
| Si-ACM | 100 |
| 2,5-Dimethyl-2,5-bis-(tert.butylperoxi-hexan) | 1,8 |
| Triallylisocyanurat | 2 |
| | 103,8 |

Si-ACM bedeutet silikondurchdrungenes Acrylat-Polymer aus einem Silikon-Compound mit zwei unterschiedlich reaktiven funktionellen Gruppen pro Molekül, copolymerisiert mit Acrylsäureester.
Die Vormischungen (Basismischungen) I und II wurden auf übliche Weise hergestellt. Sie wurden auf einem Labor-Walzwerk miteinander verschnitten. Bei allen Verschnitten erfolgte die Vulkanisation bei 170°C während 15 Minuten ; anschließend wurden alle Vulkanisate und Co-Vulkanisate 6 Stunden bei 150°C getempert.
Von den Produkten wurden in kautschuktechnisch üblicher Weise Probekörper hergestellt und diese untersucht. Die Ergebnisse sind in der nachfolgenden Tafel I zusammengefaßt.

Tafel I:

| | | | | | |
|---|---|---|---|---|---|
| Mischung I (Hydriertes Acrylnitril-Polymer) | 100 | 80 | 50 | 20 | - |
| Mischung II (Si-ACM-Polymer) | - | 20 | 50 | 80 | 100 |
| Gew.% HNBR, bezogen auf Gesamtkautschuk | 100 | 75,8 | 44,0 | 16,4 | - |
| Gew.% Si-ACM, bezogen auf Gesamtkautschuk | - | 24,2 | 56,0 | 83,6 | 100 |
| Zugfestigkeit (MPa)(DIN 53504) | 23,6 | 20,7 | 9,3 | 5,7 | 4,1 |
| Reißdehnung (%) (DIN 53504 | 546 | 570 | 416 | 285 | 195 |
| Härte (Shore-A) (DIN 53505) | 61 | 59 | 52 | 44 | 42 |
| Rückprall- (DIN 53512) Elastizität (%) | 19 | 20 | 18 | 13 | 8 |
| Dichte (g/cm$^3$) (DIN 53479) | 1,080 | 1,109 | 1,150 | 1,198 | 1,225 |
| Weiterreiß-widerstand (N/mm) (DIN 53515) | 17,7 | 14,6 | 14,3 | 8,4 | 5,5 |

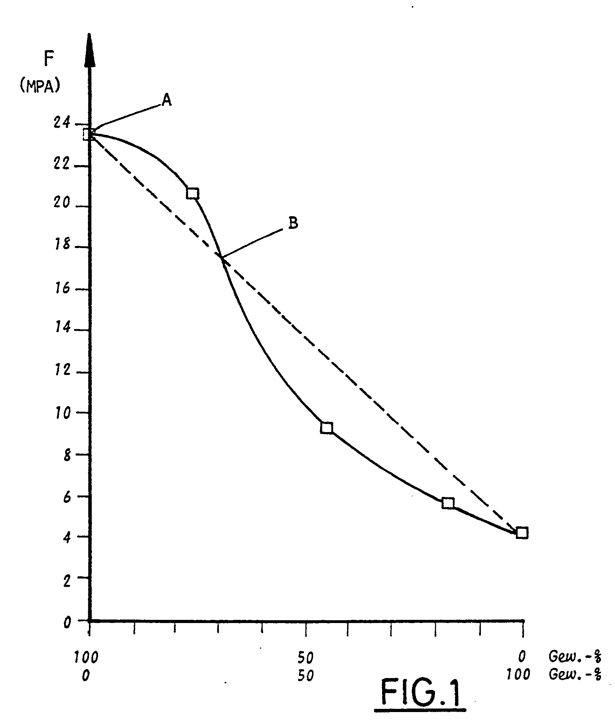

Die Abhängigkeit der Zugfestigkeit von der Zusammensetzung der Mischung ist in Fig. 1 graphisch dargestellt. Es ist erkennbar, daß im Kurvenbereich A-B eine beachtliche überadditive Steigerung der Zugfestigkeiten vorhanden ist.

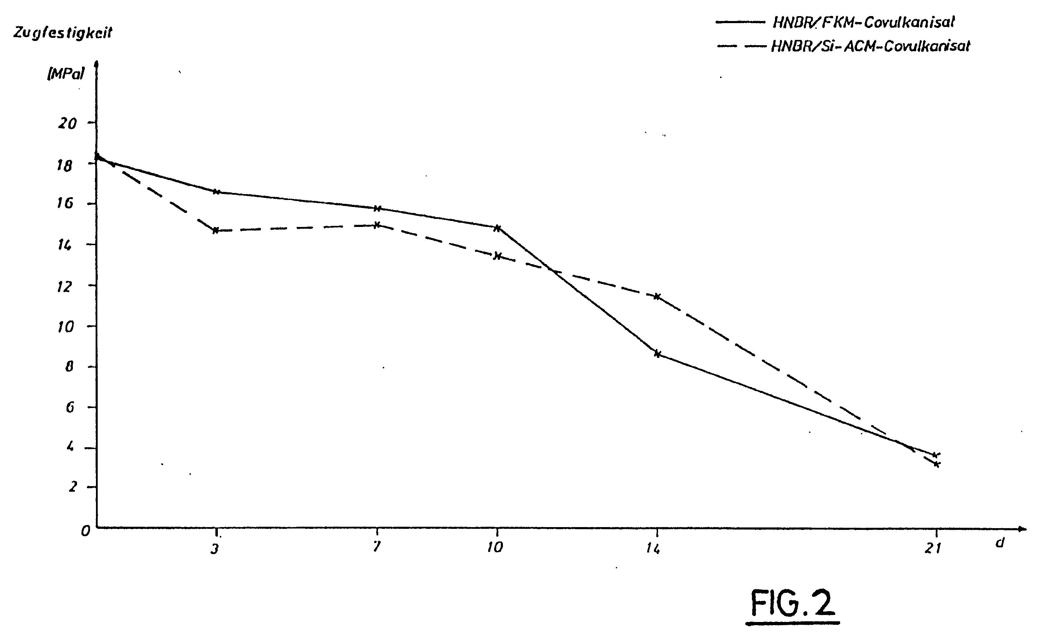

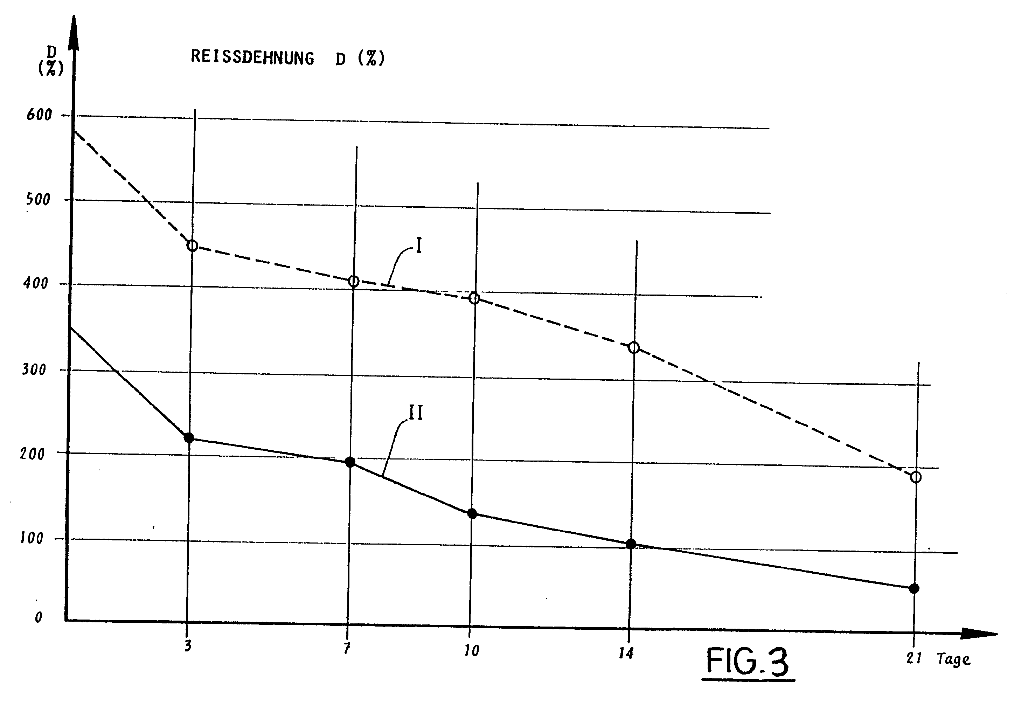

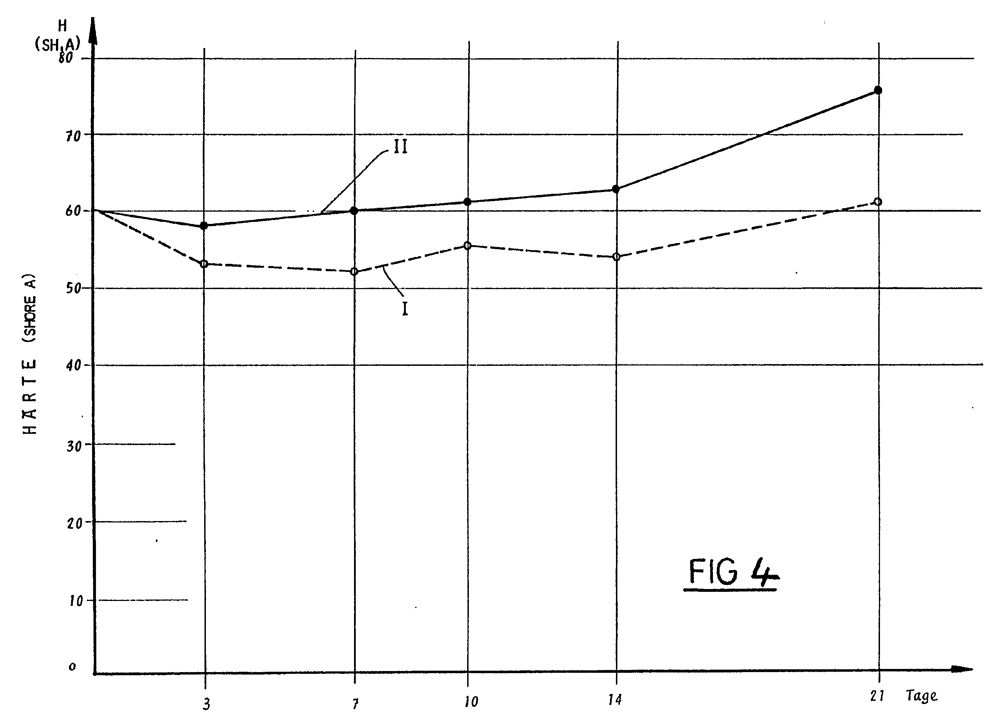

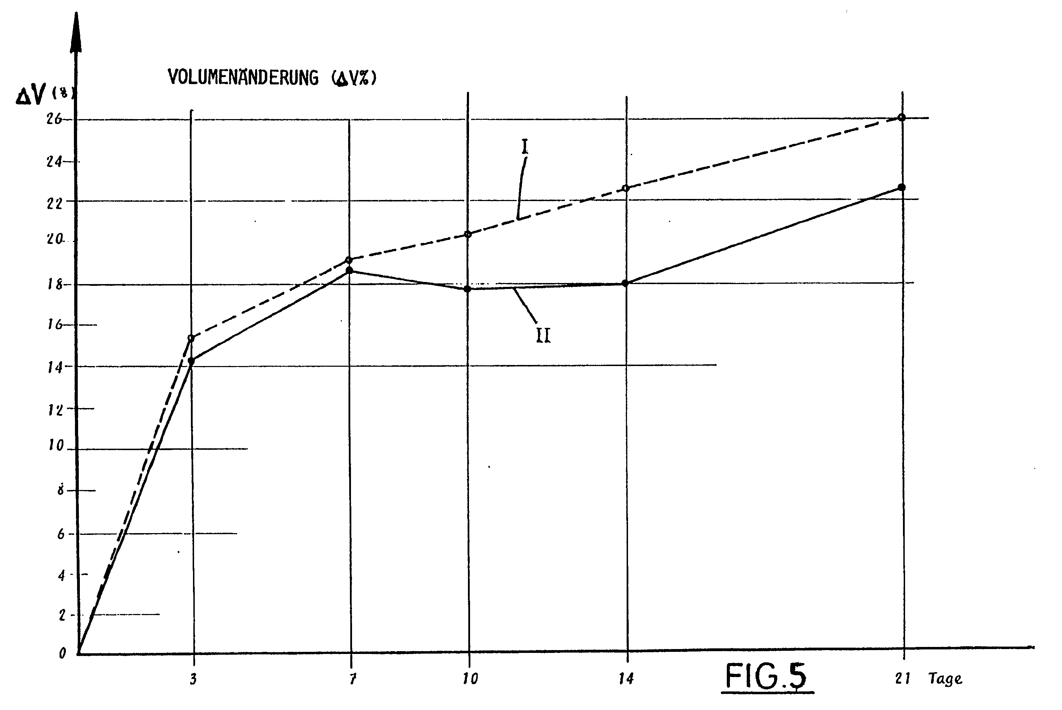

In den Fig. 2-5 wurde das Ergebnis einiger physikalischer Messungen an einem erfindungsgemäß zusammengesetzten Co-Vulkanisat wiedergegeben, welches Null bis 21 Tage bei 140°C in einem handelsüblichem additivhaltigen Hydrauliköl gelagert wurde.

Die geprüfte Mischung hatte folgende Zusammensetzung :

EP 0 322 521 B1

| HNBR | 43.2 Gewichtsteile |
|---|---|
| Si/ACM | 10,8 " |
| Ruß | 10,8 " |
| Magnesiumoxid | 1,62 " |
| Distiryldiphenylamin | 0,43 " |
| 4-bzw.-5-Methylmercaptobenzimidazol | 0,43 " |
| Polyethylen-Homopolymer | 0,54 " |
| Stearinsäure | 0,27 " |
| Carnaubawachs | 0,27 " |
| Dispergier- und Gleitmittel | 0,54 " |
| Triallylisocyanurat | 1,0 " |
| 2,5-Dimethyl-2,5-bis-(tert.butylperoxid-Hexan) | 1,0 |

Dem erfindungsgemäß zusammengesetzten Co-Vulkanisat (I) wird ein Co-Vulkanisat aus hydriertem Acrylnitril-Butadien-Polymer und Fluorpolymer (II) gegenübergestellt.

In den Fig. 2-5 sind die Kurven für die erfinungsgemäß zusammengesetzte Mischung gestrichelt dargestellt. Die ausgezogenen Kurven beziehen sich auf das Co-Vulkanisat aus hydriertem Acrylnitril-Butadien-Polymer und Fluorpolymer.

Gegenüberstellung technologischer Daten :

| | (I) | (II) | |
|---|---|---|---|
| Härte (Shore A) | 60 | 62 | -DIN 53505 |
| Zugfestigkeit (MPa) | 18,3 | 18,2 | -DIN 53504 |
| Reißdehnung (%) | 580 | 340 | -DIN 53504 |
| Rückprallelastizität (%) | 21 | 21 | -DIN 53512 |
| Dichte (g/cm$^3$) | 1,12 | 1,33 | -DIN 53479 |
| Weiterreißwiderstand (N/mm) | 22,1 | 10,4 | -DIN 53515 |
| Druckverformungsrest (%) (22h-150°C) | 33,0 | 24,2 | -DIN 53517 |

## Patentansprüche

1. Co-vulkanisierbare Kautschukmischung aus nitrilgruppenhaltigen CH-Polymeren, weiteren Polymeren und Zusatzstoffen, gekennzeichnet durch folgende Zusammensetzung :
(a) 5-95 Gew.% eines nitrilgruppenhaltigen CH-Polymeren
(b) 95-5 Gew.% eines silikon-durchdrungenen Polyacrylat-Polymeren
wobei sich die Prozentangaben auf die Summe (a + b) beziehen und die Mischung gegebenenfalls noch weitere Hilfs- und Zusatzstoffe enthält.

2. Kautschuk-Mischung nach Anspruch 1 dadurch gekennzeichnet, daß die CH-Polymeren (a) 25-140 Nitrilstickstoff-Atome und weniger als 35 Doppelbindungen auf 1000 C-Atome enthalten.

6

EP 0 322 521 B1

3. Kautschuk-Mischung nach Anspruch 2, dadurch gekennzeichnet, daß die CH-Polymere (a) weniger als zwei Doppelbindungen auf 1000 C-Atome enthalten.

4. Co-vulkanisierbare Kautschuk-Mischung nach einem der vorstehenden Ansprüche, dadurch gekennzeichnet, daß die silikondurchdrungenen Polyacrylat-Polymere durch Co-Polymerisation von Acrylmonomeren mit Silikonen oder Organosylil-Verbindungen erhalten wurden, die unterschiedlich reaktive Gruppen im Molekül enthalten.

5. Co-vulkanisierbare Kautschuk-Mischung nach Anspruch 4, dadurch gekennzeichnet, daß das silikondurchdrungene Polyacrylat-Polymer reaktive Vinylsiloxangruppen enthält.

6. Unter Verwendung einer Kautschuk-Mischung nach einem der vorstehenden Ansprüche hergestelltes Co-Vulkanisat, dadurch gekennzeichnet, daß es unter Verwendung von Peroxiden oder mittels energiereicher Strahlen erzeugt worden ist.

## Claims

1. Covulcanisable rubber mixture comprising nitrile group-containing CH polymers, further polymers and additives, characterised by the following composition :
(a) 5-95% by weight of a nitrile group-containing CH polymer and
(b) 95-5% by weight of a silicone-impregnated polyacrylate polymer,
the percentage data being based on the sum (a + b), and the mixture optionally also containing further assistants and additives.

2. Rubber mixture according to Claim 1, characterised in that the CH polymers contain (a) 25-140 nitrile nitrogen atoms and less than 35 double bonds per 1000 C atoms.

3. Rubber mixture according to Claim 2, characterised in that the CH polymers (a) contain less than two double bonds per 1000 C atoms.

4. Covulcanisable rubber mixture according to one of the preceding claims, characterised in that the silicone-impregnated polyacrylate polymers have been obtained by copolymerisation of acrylate monomers with silicones or organosylyl compounds which contain groups of differing reactivity in the molecule.

5. Covulcanisable rubber mixture according to Claim 4, characterised in that the silicone-impregnated polyacrylate polymer contains reactive vinylsiloxane groups.

6. Covulcanisate prepared using a rubber mixture according to one of the preceding claims, characterised in that it has been produced using peroxides or by means of high-energy radiation.

## Revendications

1. Mélange de caoutchouc covulcanisable à base de polymères-CH contenant des groupes nitriles, d'autres polymères et de matières additives, caractérisé par la composition suivante :
(a) 5 à 95% en poids d'un polymère-CH contenant des groupes nitriles,
(b) 95 à 5% en poids d'un polymère de polyacrylate pénétré de silicone,
les pourcentages indiqués se rapportant au total (a + b), et le mélange contenant en outre éventuellement d'autres matières auxiliaires et additifs.

2. Mélange de caoutchouc selon la revendication 1, caractérisé par le fait que les polymères-CH (a) contiennent 25 à 140 atomes azote des groupes nitriles et moins de 35 doubles liaisons pour 1000 atomes C.

3. Mélange de caoutchouc selon la revendication 2, caractérisé par le fait que les polymères-CH (a) contiennent moins de deux doubles liaisons pour 1000 atomes C.

4. Mélange de caoutchouc covulcanisable selon l'une des revendications précédentes, caractérisé par le fait que les polymères de polyacrylate pénétrés de silicone ont été obtenus par copolymérisation de monomères acryliques avec des silicones ou des composés organosilyles qui contiennent des groupes différemment réactifs dans la molécule.

5. Mélange de caoutchouc covulcanisable selon la revendication 4, caractérisé par le fait que le polymère de polyacrylate pénétré de silicone contient des groupes vinylsiloxane réactifs.

6. Covulcanisat obtenu en utilisant un mélange de caoutchouc selon l'une des revendications précédentes, caractérisé par le fait qu'il a été produit en utilisant des peroxydes ou au moyen de rayons à haute énergie.

FIG.1

FIG.2

REISSDEHNUNG D (%)

FIG.3

EP 0 322 521 B1

10

H (SH,A)

HARTE (SHORE A)

80
70
60
50
40
30
20
10
0

II

I

3    7    10    14    21    Tage

## FIG 4

FIG.5